# EUROPEAN PATENT SPECIFICATION

(11) **EP 3 553 706 B1**
(45) Date of publication and mention of the grant of the patent: **22.12.2021**
(21) Application number: 17877547.4
(22) Date of filing: 22.11.2017
(51) Int. Cl.: B42D 25/369, B42D 25/373, B42D 25/23, B42D 25/29, B42D 25/405, G06K 19/06, G07D 7/004

(54) **ANTI-COUNTERFEITING ELEMENT AND ANTI-COUNTERFEITING PRODUCT**
FÄLSCHUNGSSICHERES ELEMENT UND FÄLSCHUNGSSICHERES PRODUKT
ÉLÉMENT ANTI-CONTREFAÇON ET PRODUIT ANTI-CONTREFAÇON

(30) Priority: 08.12.2016 CN 201611122526
(43) Date of publication of application: 16.10.2019
(73) Proprietor: Zhongchao Special Security Technology Co., Ltd, Beijing 100070 (CN); China Banknote Printing and Minting Corp., Beijing 100044 (CN)
(72) Inventor: WANG, Jihong, Baoding Hebei 071071 (CN); TIAN, Zichun, Baoding Hebei 071071 (CN); CHANG, Hefeng, Beijing 071071 (CN); SUN, Huina, Baoding Hebei 071071 (CN)
(74) Representative: Ström & Gulliksson AB
(86) International application number: PCT/CN2017/112253
(87) International publication number: WO 2018/103528

(56) References cited:
- EP-A2- 0 310 707
- WO-A1-03/002355
- WO-A1-2006/042667
- WO-A1-2014/161674
- CN-A- 1 522 204
- CN-A- 101 076 454
- CN-A- 106 599 966
- US-A- 6 073 845
- US-A1- 2010 219 245
- US-A1- 2015 231 912

## Description

### TECHNICAL FIELD

The present invention relates to the technical field of anti-counterfeiting, and particularly relates to a security element and a security product.

### BACKGROUND

Most of the valuable documents contain security elements made of magnetic materials, such as magnetic icons, magnetic security threads or strips. The magnetic materials can be applied to the security elements continuously or in some areas of the security elements, for example, in the form of a magnetic icon or magnetic code.

In order to improve the anti-counterfeiting level of security elements, the patent application of CN102971748A has proposed a method for forming a magnetic code region by using two or more materials with different coercivity, wherein the magnetic unit formed by the two materials has a certain imperceptibility to the magnetic code and has higher anti-counterfeiting performance, but the printing overprinting of the two materials has high production difficulty, and the security element can be recognized only through special detection equipment.

WO 2006/042667 A1 (GIESECKE & DEVRIENT GMBH [DE]; SCHUETZMANN JUERGEN [DE] ET AL.) 27 April 2006 relates to a security element comprising at least two magnetic materials that are provided with a different coercive field intensity while being applied to and/or inserted into the security element in such a way that the remanence thereof is the same.

WO 03/002355 A1 (GIESECKE & DEVRIENT GMBH [DE]; HEIM MANFRED [DE]) 9 January 2003 relates to a security element that is provided with a first code consisting of a magnetic material and/or a second code consisting of an electrically conductive material, in addition to a third, optically readable code, which is in the magnetic and/or electrically conductive code or is preferably produced with a third neutral material, wherein the neutral material is neither electrically conductive nor magnetic.

WO 2014/161674 A1 (MANTEGAZZA A ARTI GRAFICI [IT]) 12 April 1989 relates to a security element having a magnetic coding composed of magnetic elements.

### SUMMARY

An object of the present invention is to provide a security element and a security product, wherein the security element has better imperceptibility to magnetic code and higher anti-counterfeiting performance. Printing production is simpler due to no need of high-precision overprinting, and the security element can be recognized through universal detection equipment.

In order to achieve the above object, the present invention provides a security element, comprising: a base material; and one or more magnetic units located on the base material, wherein a magnetic signal width of at least a first magnetic unit of the one or more magnetic units is smaller than the visual width of the first magnetic unit.

Optionally, the one or more magnetic units are made of one magnetic material.

Optionally, the material is magnetically conductive ink.

Optionally, a magnetic content of at least a first region of the first magnetic unit is greater than a magnetic content of remaining regions of the first magnetic unit.

Optionally, the one or more magnetic units are periodically arranged on the base material.

Optionally, each of the one or more magnetic units is one or more of the following: letters, numbers, words and/or patterns.

Optionally, the magnetic regions of the one or more magnetic units have optical opacity.

Accordingly, the present invention further provides a security product, which comprises the above-mentioned security element.

Through the above technical solution, the magnetic signal width generated by a magnetic sensor for at least one magnetic unit in the security element is smaller than the visual width of the magnetic unit, and the authenticity of the security element can be easily detected by this feature, thus improving the anti-counterfeiting performance of the security element and having better imperceptibility to magnetic code, meanwhile, the security element can achieve batch production easily and can be recognized by a commercially available currency detector.

Other characteristics and advantages of the present invention will be described in detail in the following detailed description.

### BRIEF DESCRIPTION OF THE DRAWINGS

The drawings are intended to provide a further understanding of the present invention, are a part of the description, are intended to explain the present invention together with the following specific embodiments, but do not constitute a limitation to the present invention.

In the drawings:
Fig. 1 is a schematic diagram of a magnetic unit exemplified by the letter "B";
Fig. 2 (a) is schematic diagrams of magnetic units composed of letters and numbers in the prior art and an embodiment of the present invention, respectively;
Fig. 2 (b) is cross-sectional views of the magnetic units shown in Fig. 2 (a) in the direction of the broken line and the arrow;
Fig. 2 (c) is schematic diagrams of machine-readable signals of the magnetic units shown in Fig. 2 (a);
Fig. 3 (a) is schematic diagrams of magnetic units composed of heart-shaped patterns in the prior art and an embodiment of the present invention, respectively;
Fig. 3 (b) is schematic diagrams of bar or block-shaped magnetic codes produced by the prior art;
Fig. 3 (c) is schematic diagrams of machine-readable signals of the magnetic units shown in Fig. 3 (a) and the bar or block-shaped magnetic codes shown in Fig. 3 (b);
Fig. 4 (a) is a schematic diagram of a magnetic unit with a larger area;
Fig. 4 (b) and Fig. 4 (c) are schematic diagrams of machine-readable signals of the magnetic unit shown in Fig. 4 (a) corresponding to the prior art and an embodiment of the present invention, respectively;
Fig. 5 is a schematic diagram of a security element provided by an embodiment of the present invention applied to a magnetic icon;
Fig. 6 is a schematic diagram of a security element provided by an embodiment of the present invention applied to a security thread; and
Fig. 7 is a structural schematic diagram of a security element provided by an embodiment of the present invention applied to a security thread in a hidden manner.

### DETAILED DESCRIPTION

The detailed description of the present invention will be described in detail by combining the following drawings. It should be understood that the detailed embodiments described herein are merely used for illustrating and explaining, but not restricting the present invention. Besides, those skilled in the art should appreciate that the gray scale and dimensional proportion in all of the drawings are merely illustrative and do not represent the actual color and dimensional proportion.

The "first" and "second" referred in the embodiment of the present invention are merely used for descriptive purposes and are not to be interpreted as indicating or implying a relative importance or implicitly indicating the number of the indicated technical characteristics.

The embodiment of the present invention provides a security element as defined in claim 1.

A pulse signal corresponding to the magnetic unit can be obtained when the security element is detected by a magnetic sensor. A distance between a wave peak and a wave trough of the pulse signal corresponding to edges of a region capable of generating a pulse signal in the magnetic unit is defined as a magnetic signal width. The security element provided by the embodiment of the present invention at least has one magnetic unit, wherein the magnetic signal width corresponding to the magnetic unit is smaller than the visual width of the magnetic unit, so that the pulse signal will not be reproduced depending on the appearance characteristics of the security element, thereby improving the anti-counterfeiting performance of the security element. Moreover, the anti-counterfeiting performance of the security element can be detected easily, for example, the authenticity of the security element can be recognized by a commercially available currency detector, and the security element has low production difficulty and is easy for batch production.

Optionally, the one or more magnetic units may be made of one kind of magnetic material, for example, the material can be conductive ink. The magnetic unit is made of one kind of material, therefore, it can be made by one-step printing, has simple manufacturing process, and greatly reduces the production difficulty and manufacturing cost of the security element. Optionally, the magnetic signal width may be made smaller than the visual width of the magnetic unit by controlling the ink contents of different regions of the magnetic unit. When the security element is detected by a magnetic sensor, the width of the machine-readable identifiable region is only the same as the width of the region of the portion with a larger magnetic content, therefore, the magnetic signal width may be made smaller than the visual width of the magnetic unit by setting the magnetic content of at least one region of the magnetic unit larger than that of the remaining regions.

The magnetic unit can be one or more of the following: letters, numbers, words and/or patterns. Optionally, the magnetic unit can be periodically or aperiodically arranged on the base material.

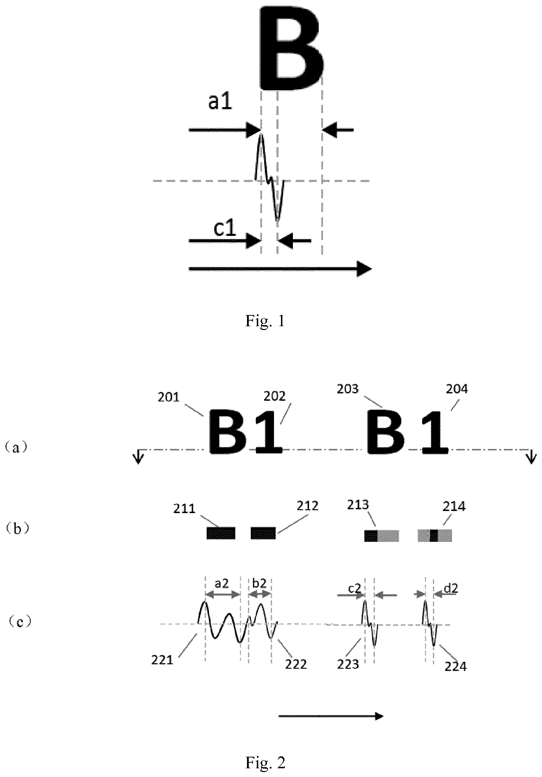

Fig. 1 is a schematic diagram of a magnetic unit exemplified by the letter "B". As shown in Fig. 1, the magnetic content of the left portion of the letter "B" is larger than that of the right portion, but the letter "B" is uniformly opaque as a whole under the visual effect. When machine-reading is performed on the letter "B" in the direction of the arrow, the generated magnetic signal width c1 is smaller than the visual width a1 of the letter "B". It should be understood that the letter "B" is used herein for illustration only and is not intended to limit the present invention.

Fig. 2 (a) is schematic diagrams of magnetic units composed of letters and numbers in the prior art and an embodiment of the present invention, respectively. As shown in Fig. 2 (a), the letter 201 and the number 202 are two magnetic units made by the prior art, and the letter 203 and the number 204 are magnetic units provided by the embodiment of the present invention. As seen from Fig. 2 (a), the letters 201 and 203 have the same visual effect, and so do the numbers 202 and 204.

Fig. 2 (b) is cross-sectional views of the magnetic units shown in Fig. 2 (a) in the direction of the broken line and the arrow. The cross-sectional views 211 and 212 show that the regions of the letter 201 and the number 202 produced by using the prior art have the same magnetic content, wherein the same magnetic ink is used during the production and they have the same plate-making parameters. The dark and light regions in the cross-sectional views 213 and 214 adopt different plate-making designs, wherein the dark region has a larger magnetic ink filling content, while the light region has a smaller magnetic ink filling content and is consistent with the dark region only in appearance. When the magnetic unit is detected by a magnetic sensor, only the dark region can generate a machine-readable pulse signal.

Fig. 2 (c) is schematic diagrams of machine-readable signals of the magnetic units shown in Fig. 2 (a). When machine-reading is performed on the magnetic unit in the direction of the arrow in the figure, the letter 201 and the number 202 produced by the prior art can generate pulse signals 221 and 222, wherein the magnetic signal width a2 of the pulse signal 221 is the same as the width of the letter 201, and the magnetic signal width b2 of the pulse signal 222 is the same as the width of the number 202. The letter 203 and the number 204 of the magnetic unit provided by the embodiment of the present invention can generate pulse signals 223 and 224, wherein the magnetic signal width c2 of the pulse signal 223 is smaller than the width of the letter 203 and is the same as the width of the dark region in the cross-sectional view 213, and the magnetic signal width d2 of the pulse signal 224 is smaller than the width of the number 204 and is the same as the width of the dark region in the cross-sectional view 214. The pulse signal generated by the magnetic unit provided by the embodiment of the present invention is more suitable for machine-reading.

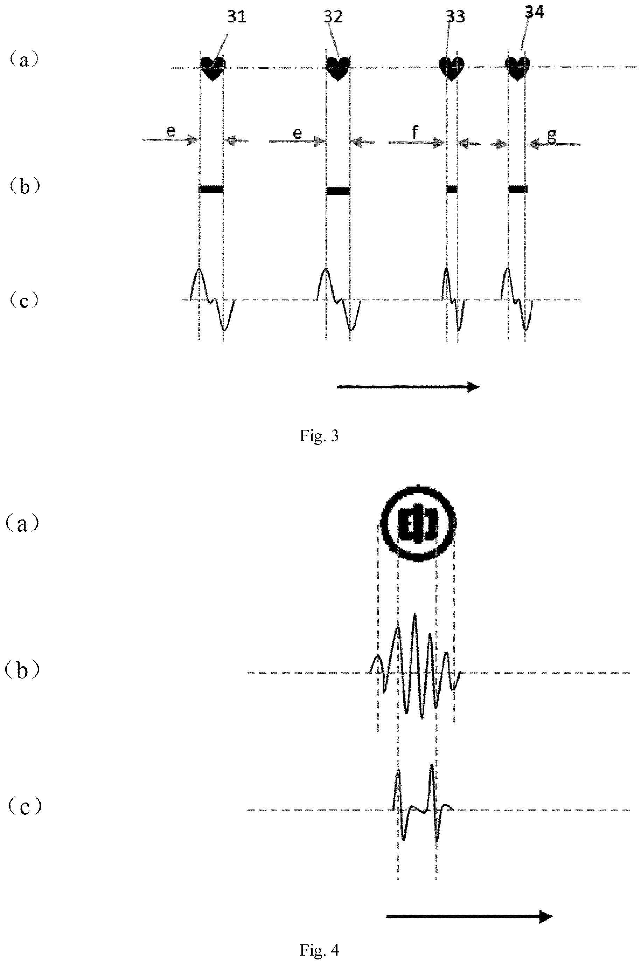

Fig. 3 (a) is schematic diagrams of magnetic units composed of heart-shaped patterns in the prior art and an embodiment of the present invention, respectively. The heart-shaped patterns 31, 32, 33 and 34 of the Fig. 3 (a) are the same in size and shape, wherein the heart-shaped patterns 31 and 32 are magnetic units manufactured by the prior art, and the heart-shaped patterns 33 and 34 are magnetic units provided by the embodiment of the present invention.

Fig. 3 (c) is schematic diagrams of machine-readable signals of the magnetic units shown in Fig. 3 (a). As shown in Fig. 3 (c), when .the magnetic units are detected by a magnetic sensor in the direction of the arrow in the figure, the magnetic signal widths of the pulse signals generated by the heart-shaped patterns 31 and 32 are equal to the widths e of the heart-shaped patterns 31 and 32, wherein the magnetic signal widths of the pulse signals generated by the heart-shaped patterns 33 and 34 are f and g, respectively, which are smaller than the visual widths e of the heart-shaped patterns 33 and 34. The magnetic signal widths f and g generated by the heart-shaped patterns 33 and 34 provided by the embodiment of the present invention may vary with the changes in the width of the region with a large magnetic content in the heart-shaped pattern.

Fig. 3 (b) is schematic diagrams of bar or block-shaped magnetic codes produced by the prior art, and Fig. 3 (c) is schematic diagrams of machine-readable signals of the bar or block-shaped magnetic codes shown in Fig. 3 (b). The machine-readable signal generated by each of the bar or block-shaped magnetic codes in Fig. 3 (b) corresponds to the machine-readable signal generated by each of the heart-shaped patterns in Fig. 3 (a). However, in practical applications, for example, when an elongated security thread is manufactured, the Fig. 3 (a) can provide both visual anti-counterfeiting features and machine-readable anti-counterfeiting features, while the Fig. 3 (b) is less aesthetically pleasing and more suitable for providing machine-readable anti-counterfeiting features only.

As for one example application shown in the Fig. 3 (b), the bar or block-shaped magnetic codes shown in the Fig. 3 (b) can be hidden in a security document through a metal layer or an opaque ink layer, such as, the application mode in the security thread of Euro and Pound Sterling bills.

Fig. 4 (a) is a schematic diagram of a magnetic unit with a larger area. Fig. 4 (b) shows the pulse signal generated when machine-reading is performed on the magnetic unit manufactured by the prior art as shown in the Fig. 4 (a) in the direction of the arrow, and it can be seen from the figure that the pulse signal has more clutter peaks and is not conducive to quantitative machine-reading. Fig. 4 (c) shows the pulse signal generated when machine-reading is performed on the magnetic unit of the embodiment of the present invention as shown in Fig. 4 (a) in the direction of the arrow, wherein the pulse signal is formed by the region with a large magnetic content, and it can be seen from the figure that the peak interval of the pulse signal is clear and is suitable for quantitative machine-reading.

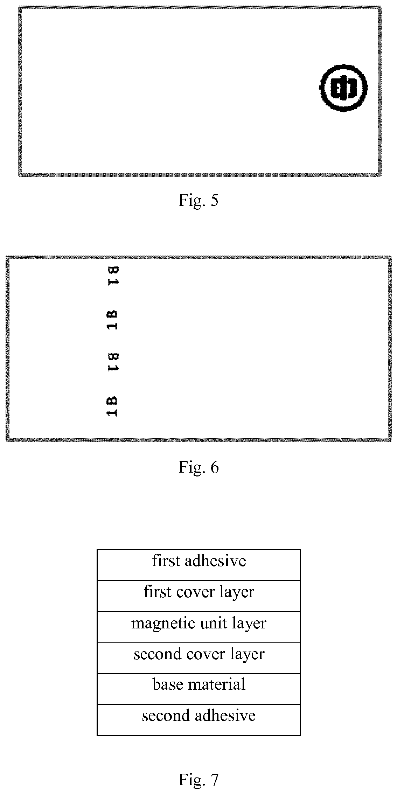

Fig. 5 is a schematic diagram of a security element provided by an embodiment of the present invention applied to a magnetic icon. As shown in Fig. 5, when the security element provided by the embodiment of the present invention is applied to a magnetic icon, it can provide both visual anti-counterfeiting features and machine-readable anti-counterfeiting features.

Fig. 6 is a schematic diagram of a security element provided by an embodiment of the present invention applied to a security thread. As shown in Fig. 6, the magnetic units can be periodically arranged on the base material, and the letter and number type magnetic units shown in the figure are used for illustration only and are not intended to limit the present invention. The security thread can be elongated, and can be implanted into paper as a security element. The security thread can also be printed directly onto the base material of the security documents. It can be seen from the figure that the security element provided by the embodiment of the present invention can also provide both visual anti-counterfeiting features and machine-readable anti-counterfeiting features when applied to a security thread.

Fig. 7 is a structural schematic diagram of a security element provided by an embodiment of the present invention applied to a security thread in a hidden manner. As shown in Fig. 7, in the structural schematic diagram of the security thread, a first cover layer covers on the magnetic unit layer of the security element, a second cover layer covers under the magnetic unit layer of the security element, and the first cover layer and the second cover layer are adhered to various articles such as banknotes through a first adhesive and a second adhesive. In the example of Fig. 7, the second cover layer covers on the base material, but it should be understood that the second cover layer may also cover under the base material depending on the particular application or the needs of the actual application. Here, the second cover layer may be, such as, a metal plating layer or covering ink, but the present invention is not limited thereto.

The security element provided by the present invention can be used for making security threads, wide strips, labels, markers, etc., or can be directly printed on security documents or adhered to various articles by various bonding mechanisms, such as printing on polymer banknotes or transferring to high security products and high value-added products, such as banknotes and credit cards.

On the other hand, the present invention provides a security product comprising the above-mentioned security element. Optionally, the security element can be provided in the security product in an embedded or windowed manner. The security product comprises, but is not limited to one of the following: banknotes, bank bills, tickets, certificates, documents or credit cards, and so on.

The security element provided by the embodiment of the present invention has simple production process and high anti-counterfeiting performance, and can be well integrated in the design of valuable documents as a part of the graphic design of the valuable documents.

The preferred embodiments of the present invention have been described in detail by combining the drawings, however, the present invention is not limited to the specific details of the embodiments described above, and various modifications may be made to the technical solution of the present invention within the scope of the technical ideas of the present invention, in which all of these simple modifications belong to the scope of the present invention.

It should be further noted that each technical feature described in the above specific embodiments may be combined in any appropriate way under the condition of no contradiction. To avoid unnecessary repetition, any possible combinations will not be specified separately in the present invention.

## Claims

1. A security element, comprising:
a base material; and
one or more magnetic units located on the base material,
**characterized in that**,
a magnetic signal width (c2, d2, f, g) of at least a first magnetic unit (203, 204, 33, 34) of the one or more magnetic units is smaller than a visual width of the first magnetic unit (203, 204, 33, 34), and the first magnetic unit (203, 204, 33, 34) is uniformly opaque as a whole, wherein the magnetic signal width (c2, d2, f, g) is defined as a distance between a wave peak and a wave trough of the pulse signal detected by a magnetic sensor and corresponding to edges of a region capable of generating a pulse signal in the magnetic unit.

2. The security element of claim 1, **characterized in that** the one or more magnetic units are made of one kind of magnetic material.

3. The security element of claim 2, **characterized in that** the material is magnetically conductive ink.

4. The security element of claim 1, **characterized in that** a magnetic content of at least a first region of the first magnetic unit (203, 204, 33, 34) is greater than a magnetic content of the remaining regions of the first magnetic unit.

5. The security element of any one of claims 1-4, **characterized in that** the one or more magnetic units are periodically arranged on the base material.

6. The security element of any one of claims 1-4, **characterized in that** each of the one or more magnetic units is one or more of the following: letters, numbers, words and/or patterns.

7. The security element of any one of claims 1-4, **characterized in that** magnetic regions of the one or more magnetic units have optical opacity.

8. A security product, **characterized in** comprising the security element of any one of claims 1-7.

## Patentansprüche

1. Sicherheitselement, das aufweist:
ein Basismaterial; und
eine oder mehrere Magneteinheiten, die sich auf dem Basismaterial befinden,
**dadurch gekennzeichnet, dass**
eine Magnetsignalbreite (c2, d2, f, g) wenigstens einer ersten Magneteinheit (203, 204, 33, 34) der einen oder der mehreren Magneteinheiten kleiner ist als eine optische Breite der ersten Magneteinheit (203, 204, 33, 34), und die erste Magneteinheit (203, 204, 33, 34) insgesamt einheitlich lichtundurchlässig ist, wobei die Magnetsignalbreite (c2, d2, f, g) als Abstand zwischen einer Wellenspitze und einem Wellental des von einem Magnetsensor ermittelten Impulssignals definiert ist und Kanten eines Bereichs entspricht, der dazu in der Lage ist, ein Impulssignal in der Magneteinheit zu erzeugen.

2. Sicherheitselement nach Anspruch 1, **dadurch gekennzeichnet, dass** die eine oder die mehreren Magneteinheiten aus einer Art von magnetischem Material hergestellt sind.

3. Sicherheitselement nach Anspruch 2, **dadurch gekennzeichnet, dass** das Material magnetisch leitende Tinte ist.

4. Sicherheitselement nach Anspruch 1, **dadurch gekennzeichnet, dass** ein magnetischer Inhalt wenigstens eines ersten Bereichs der ersten Magneteinheit (203, 204, 33, 34) größer ist als ein magnetischer Inhalt der restlichen Bereiche der ersten Magneteinheit.

5. Sicherheitselement nach einem der Ansprüche 1-4, **dadurch gekennzeichnet, dass** die eine oder die mehreren Magneteinheiten periodisch auf dem Basismaterial angeordnet sind.

6. Sicherheitselement nach einem der Ansprüche 1-4, **dadurch gekennzeichnet, dass** jede der einen oder der mehreren Magneteinheiten eines oder mehrere der folgenden ist: Buchstaben, Zahlen, Worte und/oder Muster.

7. Sicherheitselement nach einem der Ansprüche 1-4, **dadurch gekennzeichnet, dass** die magnetischen Bereiche der einen oder der mehreren Magneteinheiten optische Lichtdurchlässigkeit haben.

8. Sicherheitserzeugnis, **dadurch gekennzeichnet, dass** es das Sicherheitselement nach einem der Ansprüche 1-7 aufweist.

## Revendications

1. Élément de sécurité, comprenant :
un matériau de base ; et
une ou plusieurs unités magnétiques situées sur le matériau de base,
**caractérisé en ce que**,
une largeur de signal magnétique (c2, d2, f, g) d'au moins une première unité magnétique (203, 204, 33, 34) des une ou plusieurs unités magnétiques est supérieure à une largeur visuelle de la première unité magnétique (203, 204, 33, 34), et la première unité magnétique (203, 204, 33, 34) est uniformément opaque en tant qu'ensemble, dans lequel la largeur de signal magnétique (c2, d2, f, g) est définie comme une distance entre un pic d'onde et un creux d'onde du signal à impulsions détecté par un capteur magnétique et correspondant à des bords d'une région capable de générer un signal à impulsions dans l'unité magnétique.

2. Élément de sécurité selon la revendication 1, **caractérisé en ce que** les une ou plusieurs unités magnétiques sont faites d'un type de matériau magnétique.

3. Élément de sécurité selon la revendication 2, **caractérisé en ce que** le matériau est une encre magnétiquement conductrice.

4. Élément de sécurité selon la revendication 1, **caractérisé en ce qu'**un contenu magnétique d'au moins une première région de la première unité magnétique (203, 204, 33, 34) est supérieur à un contenu magnétique des régions restantes de la première unité magnétique.

5. Élément de sécurité selon l'une quelconque des revendications 1 à 4, **caractérisé en ce que** les une ou plusieurs unités magnétiques sont agencées périodiquement sur le matériau de base.

6. Élément de sécurité selon l'une quelconque des revendications 1 à 4, **caractérisé en ce que** chacune des une ou plusieurs unités magnétiques est un ou plusieurs de ce qui suit : des lettres, des chiffres, des mots et/ou des motifs.

7. Élément de sécurité selon l'une quelconque des revendications 1 à 4, **caractérisé en ce que** des régions magnétiques des une ou plusieurs unités magnétiques ont une opacité optique.

8. Produit de sécurité, **caractérisé en ce qu'**il comprend l'élément de sécurité selon l'une quelconque des revendications 1 à 7.
